# EUROPÄISCHE PATENTSCHRIFT

(11) **EP 2 291 933 B1**
(45) Veröffentlichungstag und Bekanntmachung des Hinweises auf die Patenterteilung: **07.09.2011**
(21) Anmeldenummer: 09735953.3
(22) Anmeldetag: 02.04.2009
(51) Int. Cl.: H04B 17/00, H04B 7/06

(54) **BEURTEILUNG DER FEEDBACK-QUALITÄT IN KOMMUNIKATIONSSYSTEMEN**
EVALUATION OF THE FEEDBACK QUALITY IN COMMUNICATION SYSTEMS
ÉVALUATION DE LA QUALITÉ DE RÉACTION DANS DES SYSTÈMES DE COMMUNICATION

(30) Priorität: 22.04.2008 DE 102008020141
(43) Veröffentlichungstag der Anmeldung: 09.03.2011
(73) Patentinhaber: Rohde & Schwarz GmbH & Co. KG, 81671 München (DE)
(72) Erfinder: GESSNER, Christina, 81673 München (DE)
(74) Vertreter: Körfer, Thomas
(86) Internationale Anmeldenummer: PCT/EP2009/002436
(87) Internationale Veröffentlichungsnummer: WO 2009/129917

(56) Entgegenhaltungen:
- US-A- 5 982 760
- US-A1- 2005 170 782

## Beschreibung

Die Erfindung betrifft ein Messsystem und ein Verfahren zur Bestimmung der Qualität des von Kommunikationsgeräten in Kommunikationssystemen, insbesondere MIMO-Kommunikationssystemen (Multiple Input Multiple Output-Kommunikationssystemen), gesendeten Feedbacks (Rückmeldung) der Empfangssignalqualität.

Herkömmlich wird in Kommunikationssystemen, wie z.B. UMTS oder WiMax, das von Teilnehmergeräten gesendete Feedback, die Kanalqualität betreffend, zur Anpassung der Übertragung z.B. der Basisstation herangezogen. So wird in einem Closed-Loop-Verfahren z.B. das Precoding verändert, um einen optimalen Empfang auf Endgeräteseite zu gewährleisten. Dieses Verfahren ist jedoch auf eine möglichst genaue Abschätzung der Übertragungsbedingungen bzw. Mobilfunk-Kanaleigenschaften auf Empfängerseite angewiesen. Obwohl die Teilnehmergeräte mit entsprechenden Funktionen ausgestattet sind, sind bislang keine Verfahren und Vorrichtungen zur Verifikation der korrekten Funktion bekannt.

So zeigt die Europäische Patentanmeldung EP 1 890 413 A2 Verfahren und Vorrichtungen zum Senden und Empfangen solcher Feedback-Informationen von einem Kommunikationsgerät zu einer Basisstation. Eine Verifizierung dieser Feedback-Informationen ist jedoch nicht offenbart. Ein Überprüfen von Feedback-Informationen ist z.B. in der US-Patentanmeldung US 2005/170782 offenbart.

Der Erfindung liegt die Aufgabe zu Grunde, ein Messsystem und ein Messverfahren zu schaffen, welche mit geringem Aufwand die Feedback-Signale von Kommunikationsgeräten überprüfen.

Die Aufgabe wird erfindungsgemäß für das Verfahren durch die Merkmale des unabhängigen Anspruchs 1 und für die Vorrichtung durch die Merkmale des unabhängigen Anspruchs 7 gelöst. Vorteilhafte Weiterbildungen sind Gegenstand der hierauf rückbezogenen Unteransprüche.

Ein Messsystem zur Überprüfung eines durch ein Kommunikationsgerät gesendeten Feedback-Signals in einem Kommunikationssystem verfügt über ein Antennensystem und ein Messgerät. Das Messgerät sendet über die Luftschnittstelle und das Antennensystem ein Signal an ein Kommunikationsgerät. Das Kommunikationsgerät empfängt das Signal und erzeugt ein Feedback-Signal in Abhängigkeit der von ihm ermittelten Übertragungsbedingungen und sendet es an das Messgerät. Das Messgerät misst die tatsächliche Empfangsqualität des Signals am Kommunikationsgerät. Das Messsystem führt dabei die folgenden Schritte durch:
- Das Messgerät verändert das an das Kommunikationsgerät gesendete Signal dergestalt, dass das gesendete Feedback-Signal keine weitere Verbesserungsmöglichkeit der Übertragungsbedingungen anzeigt.
- Das gesendete Signal und/oder die Lage des Kommunikationsgeräts und/oder des Antennensystems wird durch das Messgerät verändert;
- Das Messgerät stellt das Feedback-Signal und die tatsächliche Empfangsqualität gegenüber und ermittelt so die Qualität des Feedback-Signals. So ist die Überprüfung des Feedback-Signals gewährleistet. Der Aufwand des Messsystems ist gering.

Bevorzugt ist das Messgerät mit dem Kommunikationsgerät verbunden. Das Messgerät ermittelt bevorzugt die tatsächliche Empfangsqualität durch Ermittlung der Bitfehlerrate und/oder der Datenrate. Eine einfache Bestimmung der tatsächlichen Übertragungsqualität wird so erreicht.

Vorteilhafterweise ist das Antennensystem ein Mehrfachantennensystem. Bevorzugt empfängt das Kommunikationsgerät die Signale mittels mehrerer Antennen. Insbesondere in Kommunikationssystemen hoher Komplexität ist ein geringer Aufwand der Ermittlung der Genauigkeit der Feedback-Signale möglich.

Das Messgerät bewirkt bevorzugt die Veränderung des an das Kommunikationsgerät gesendeten Signals durch Veränderung einer Strahlform (beampattern) und/oder durch Veränderung eines Precodings und/oder durch Veränderung einer Anzahl von im Multiplexverfahren gesendeter Datenströme des Signals. Durch die Verifikation der Feedback-Signale ist so eine genauere Einstellung des Signals möglich.

Vorteilhafterweise enthält das Feedback-Signal Anweisungen zur Veränderung des an das Kommunikationsgerät gesendeten Signals zur Verbesserung der Übertragungsbedingungen. Insbesondere in einem solchen closed-loop-System ist eine hohe Genauigkeit des Feedback-Signals notwendig. Diese wird durch das erfindungsgemäße Messsystem und Verfahren erreicht.

Bevorzugt verfügt das Messgerät über einen Sender und einen Empfänger. Der Sender und der Empfänger sind bevorzugt mit dem Antennensystem verbunden. So ist der Einsatz weiterer Komponenten nicht notwendig. Weiterhin ist eine einfache Kalibrierung des Messsystems so gegeben.

Das Messgerät verfügt bevorzugt über eine Anzeige-Einrichtung. Die Anzeige-Einrichtung stellt bevorzugt Zwischenergebnisse und/oder Ergebnisse und/oder Parameter der Messung dar. Eine intuitive Bedienbarkeit und eine übersichtliche Darstellung der Messergebnisse sind so gewährleistet.

Das Kommunikationssystem ist bevorzugt ein MIMO-Kommunikationssystem. Besonders in Kommunikationssystemen hoher Komplexität ist ein geringer Aufwand der Ermittlung der Genauigkeit der Feedback-Signale möglich.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: ein beispielhaftes Kommunikationssystem;
- Fig. 2: eine erste beispielhafte Kommunikationsverbindung;
- Fig. 3: eine zweite beispielhafte Kommunikationsverbindung;
- Fig. 4: ein erstes Ausführungsbeispiel des erfindungsgemäßen Messsystems, und
- Fig. 5: ein zweites Ausführungsbeispiel des erfindungsgemäßen Messsystems.

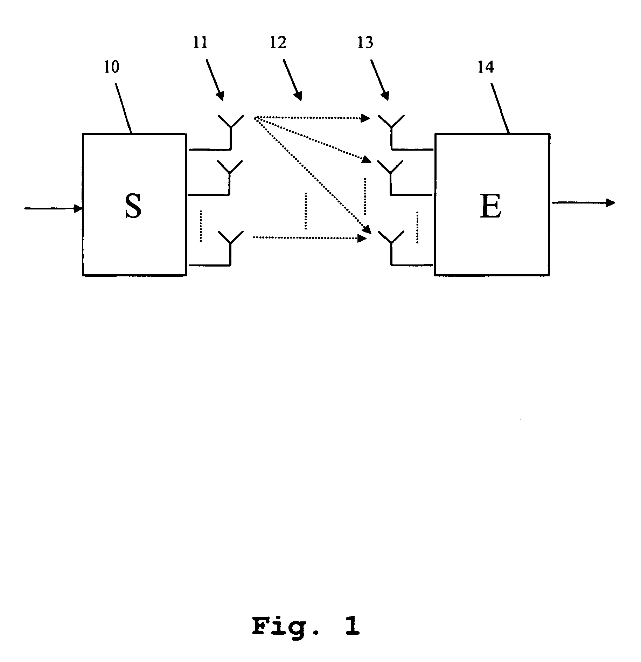

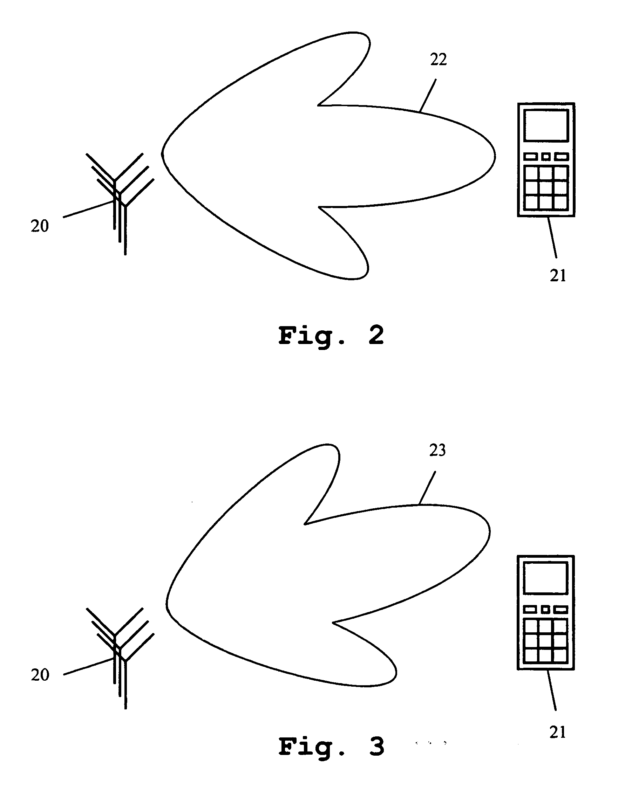

Zunächst wird anhand der Fig. 1 der Aufbau und die Funktionsweise eines MIMO-Kommunikationssystems erläutert. Mittels Fig. 2 - 5 werden anschließend der Aufbau und die Funktionsweise verschiedener Ausführungsbeispiele des erfindungsgemäßen Messsystems veranschaulicht. Identische Elemente wurden in ähnlichen Abbildungen zum Teil nicht wiederholt dargestellt und beschrieben.

Fig. 1 zeigt ein beispielhaftes Kommunikationssystem. Ein Sender 10 ist mit mehreren räumlich getrennten Antennen 11 verbunden. Ein Empfänger 14 ist ebenfalls mit mehreren räumlich getrennten Antennen 13 verbunden. Der Sender 10 sendet über die Antennen 11 Signale aus. Die Signale sind dabei nicht zwingend identisch. Die Signale breiten sich über die Ausbreitungspfade 12 aus und werden von dem Empfänger 14 über die Antennen 13 empfangen. Dabei ergeben sich bei N Antennen 11 auf Senderseite und M Antennen 13 auf Empfängerseite N*M Ausbreitungspfade 12. Durch die Beaufschlagung der Antennen 11 durch den Sender 10 mit lediglich in Amplitude und Phase leicht unterschiedlichen Signalen kann der Gesamtheit der Antennen 11 eine einer einzelnen Antenne entsprechende Strahlform aufgeprägt werden. Dieser Sachverhalt wird anhand der Fig. 2 und Fig. 3 näher erläutert.

In Fig. 2 wird eine erste beispielhafte Kommunikationsverbindung dargestellt. Ein Antennensystem 20 ist mit einem Kommunikationsgerät 21 verbunden. Das Antennensystem 20 besteht dabei aus einer Mehrzahl von einzelnen räumlich getrennt angeordneten Antennen. Diese verfügen jeweils über eine eigene Strahlform (beampattern). Die von den Antennen gesendeten Signale unterscheiden sich lediglich geringfügig in Amplitude und Phase voneinander. So ergibt sich eine gemeinsame Strahlform 22 für das gesamte Antennensystem 20. Hier ist die schematisch dargestellte Strahlform 22 des Antennensystems 20 so ausgerichtet, dass die stärkste Ausbreitungsrichtung mit dem Kommunikationsgerät 21 übereinstimmt. Durch eine Veränderung der Amplituden- und Phasen-Verschiebungen der Antennen des Antennensystems 20 kann die Strahlform verändert werden. Dies ist anhand der Fig. 3 verdeutlicht.

Fig. 3 zeigt eine zweite beispielhafte Kommunikationsverbindung. Gegenüber der in Fig. 2 gezeigten Kommunikationsverbindung sind die Amplituden- und Phasen-Verschiebungen der Antennen des Antennensystems 20 verändert worden. Es ergibt sich damit eine abweichende Strahlform 23. Die stärkste Ausbreitungsrichtung liegt nun nicht länger bei dem Kommunikationsgerät 21, sondern darüber. Die Übertragungsqualität ist somit geringer als in Fig. 2. Das Kommunikationsgerät 21 ermittelt die Übertragungsbedingungen des empfangenen Signals und bestimmt daraus ein Feedback-Signal (Rückmeldungs-Signal) welches es an den Sender übermittelt. Das Feedback-Signal enthält dabei Anweisungen an den Sender zur Veränderung des an das Kommunikationsgerät 21 gesendeten Signals um bestmögliche Übertragungsbedingungen zu erreichen. Der Sender passt daraufhin das Signal, z.B. die Strahlform entsprechend an. Ziel ist die Erreichung einer optimalen Empfangsqualität des Kommunikationsgeräts 21. Durch eine einfache Drehung des Antennensystems 20 kann eine Verschiebung der Strahlform, wie anhand der Fig. 2 und Fig. 3 dargestellt, ebenfalls erreicht werden.

Um die hier geschilderte Anpassung des Signals, z.B. durch Nachführung der Strahlform durchführen zu können, ist jedoch ein möglichst genaues Feedback-Signal notwendig.

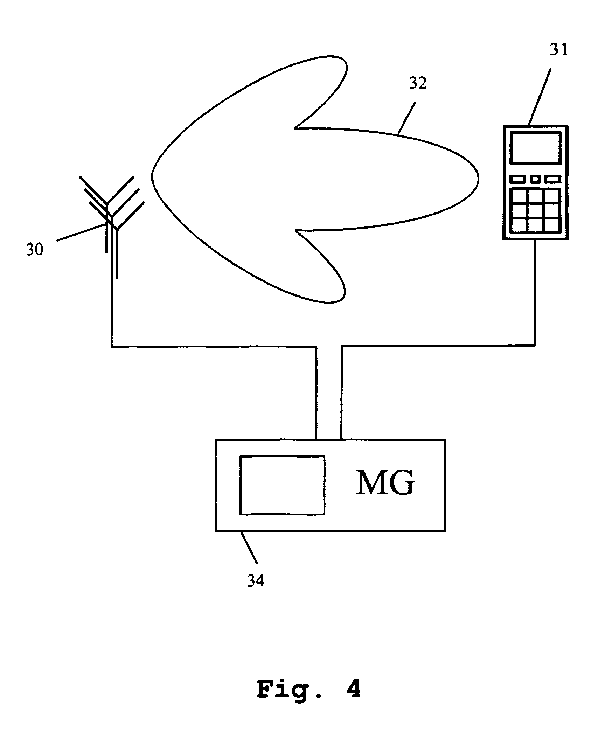

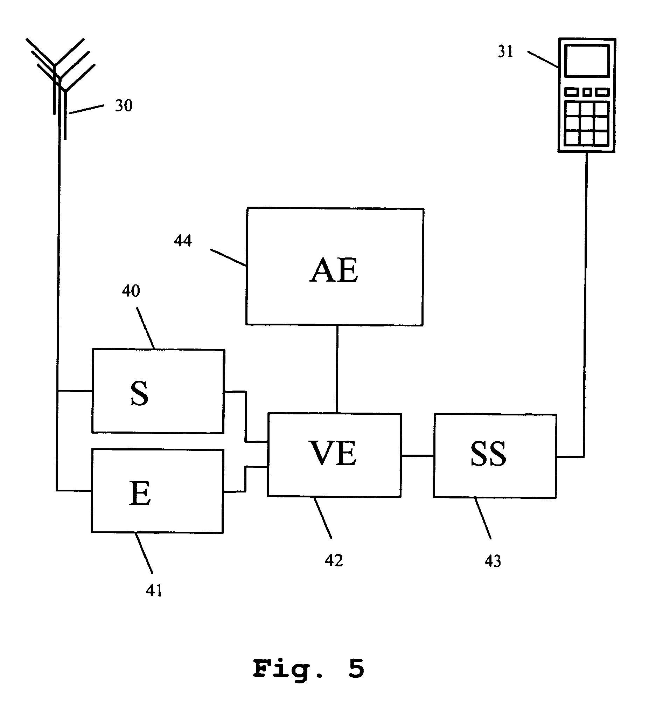

Anhand der Fig. 4 und Fig. 5 wird ein Messsystem zur Überprüfung der Genauigkeit des von einem Kommunikationsgerät erzeugten Feedback-Signals gezeigt.

In Fig. 4 wird ein erstes Ausführungsbeispiel des erfindungsgemäßen Messsystems dargestellt. Ein Antennensystem 30, bestehend aus mehreren räumlich getrennten Antennen, ist mit einem Messgerät 34 verbunden. Das Messgerät 34 ist weiterhin mit einem Kommunikationsgerät 31 verbunden.

Das Messgerät 34 sendet über das Antennensystem 30 mit einer Strahlform 32 an das Kommunikationsgerät 31. Das Kommunikationsgerät 31 empfängt das Signal und ermittelt intern die Übertragungsbedingungen. Es sendet ein Feedback-Signal über die Luftschnittstelle und das Antennensystem 30 an das Messgerät 34. Das Feedback-Signal ist dabei von den gemessenen Übertragungsbedingungen abhängig. Es enthält Anweisungen, wie das gesendete Signal zu verändern ist, um die Übertragungsbedingungen zu verbessern. Alternativ kann es die Empfangsqualität des Signals direkt widerspiegeln. Dieses Feedback-Signal wird von dem Messgerät 34 aufgezeichnet. Dies kann kontinuierlich oder in bestimmten Intervallen erfolgen. Eine kabelgebundene Übermittlung des Feedback-Signals ist ebenso denkbar. So sendet das Kommunikationsgerät 31 im Ausführungsbeispiel das Feedback-Signal nicht über die Luftschnittstelle und das Antennensystem 30 an das Messgerät 34, sondern übermittelt es ebenfalls über die direkte Verbindung.

Gleichzeitig ermittelt das Messgerät 34 über die direkte Verbindung zu dem Kommunikationsgerät 31 die tatsächliche Empfangsqualität. Dies erfolgt z.B. durch Messung der übertragenen Datenmenge oder durch Ermittlung der Bitfehlerrate. Durch Gegenüberstellung des Feedback-Signals und der tatsächlichen Empfangsqualität kann die Qualität des Feedback-Signals abgeschätzt werden.

Zur weiteren Erhöhung der Genauigkeit der Messung wird das im Folgenden beschriebene Verfahren eingesetzt. Das Messgerät 34 passt die Signale, welche über das Antennensystem 30 gesendet werden, so lange an, bis das Kommunikationsgerät 31 ein Feedback-Signal sendet, welches keine weitere Verbesserungsmöglichkeit der Übertragungsbedingungen anzeigt. Dies kann durch eine Wiederholung bereits ausgeführter durchgeführter Signalanpassungsanweisungen, ein Ausbleiben weiterer Signalanpassungsanweisungen oder durch eine angezeigte maximale Empfangsqualität erfolgen. Gleichzeitig misst das Messgerät 34 die tatsächliche Empfangsqualität, wie weiter oben beschrieben. Anschließend verändert das Messgerät 34 die über das Antennensystem 30 gesendeten Signale. Da laut dem Feedback-Signal des Kommunikationsgeräts 31 keine weitere Verbesserung der Übertragungsbedingungen zu erreichen waren, wird erwartet, dass die tatsächlich gemessene Empfangsqualität durch jede Änderung der Signale eine Verschlechterung erfährt. Ist dies nicht der Fall, weicht das Feedback-Signal von der realen Empfangsqualität ab. Eine optimale Anpassung der gesendeten Signale ist mit diesem suboptimalen Feedback nicht möglich.

Fig. 5 zeigt ein zweites Ausführungsbeispiel des erfindungsgemäßen Messsystems. Hier ist der Aufbau des Messsystems detaillierter dargestellt. Eine Verarbeitungs-Einrichtung 42 ist mit einer Anzeige-Einrichtung 44, einem Sender 40, einem Empfänger 41 und einer Schnittstelle 43 verbunden. Der Sender 40 und der Empfänger 41 sind mit dem Antennensystem 30 verbunden. Die Schnittstelle 43 ist mit dem Kommunikationsgerät 31 verbunden.

Die Verarbeitungs-Einrichtung 42 erzeugt Signale, welche über den Sender 40, das Antennensystem 30 und die Luftschnittstelle an das Kommunikationsgerät 31 gesendet werden. Das Kommunikationsgerät 31 sendet über die Luftschnittstelle, das Antennensystem 30 und den Empfänger 41 Signale, welche von der Verarbeitungs-Einrichtung 42 verarbeitet werden. Diese Signale beinhalten Feedback-Signale, welche in Abhängigkeit der von dem Kommunikationsgerät 31 ermittelten Übertragungsbedingungen erzeugt werden. Der Empfänger ist entbehrlich, wenn die Feedback-Signale ebenfalls über die Schnittstelle 43 an die Verarbeitungs-Einrichtung 42 übertragen werden. Die Verarbeitungs-Einrichtung 42 modifiziert die über den Sender 40 gesendeten Signale und verändert damit die Signale, hier z.B. die Strahlform 32 des vom Antennensystem 30 gesendeten Signals.

Die Verarbeitungs-Einrichtung 42 steht über die Schnittstelle 43 mit dem Kommunikationsgerät 31 in Verbindung. Mittels dieser Verbindung ermittelt die Verarbeitungs-Einrichtung 42 die tatsächliche Übertragungsqualität anhand z.B. der Übertragungsrate oder der Bitfehlerrate, welche durch das Kommunikationsgerät 31 erreicht werden. Die Verarbeitungs-Einrichtung 42 stellt die Feedback-Signale der über die Schnittstelle 43 gemessenen Übertragungsqualität gegenüber. So ist eine Beurteilung der Qualität der von dem Kommunikationsgerät erzeugten Feedback-Signale möglich.

Die Erfindung ist nicht auf das dargestellte Ausführungsbeispiel beschränkt. Wie bereits erwähnt, können unterschiedliche Kommunikationssysteme eingesetzt werden. So können sowohl MIMO-Systeme wie auch Systeme mit lediglich einer Antenne auf Sender- und/oder Empfängerseite eingesetzt werden. Eine Integration des Messgeräts und des Antennensystems in ein Gerät ist ebenso denkbar. Alle vorstehend beschriebenen Merkmale oder in den Figuren gezeigten Merkmale sind im Rahmen der Erfindung beliebig vorteilhaft miteinander kombinierbar.

## Patentansprüche

1. Verfahren zur Überprüfung eines, durch ein Kommunikationsgerät (21, 31) gesendeten Feedback-Signals in einem Kommunikationssystem,
wobei das Kommunikationsgerät (21, 31) das Feedback-Signal in Abhängigkeit von ihm ermittelter
Übertragungsbedingungen eines über die Luftschnittstelle empfangenen Signals erzeugt,
wobei zusätzlich die tatsächliche Empfangsqualität des Signals am Kommunikationsgerät (21, 31) gemessen wird, **dadurch gekennzeichnet, dass** die folgenden Schritte durchgeführt werden:
- Veränderung der an das Kommunikationsgerät (21, 31) gesendeten Signale dergestalt, dass das gesendete Feedback-Signal keine weitere Verbesserungsmöglichkeit der Übertragungsbedingungen anzeigt;
- Veränderung der Lage des Kommunikationsgeräts (21, 31) und/oder einer Quelle des an das Kommunikationsgerät (21, 31) gesendeten Signals und/oder Veränderung des gesendeten Signals, und
- Ermittlung einer Qualität des Feedback-Signals durch Gegenüberstellung des Feedback-Signals und der tatsächlichen Empfangsqualität.

2. Verfahren nach Anspruch 1,
**dadurch gekennzeichnet,**
**dass** die tatsächliche Empfangsqualität durch Ermittlung der Bitfehlerrate und/oder der Datenrate ermittelt wird.

3. Verfahren nach Anspruch 1 oder 2,
**dadurch gekennzeichnet,**
**dass** das Signal mittels mehrerer Antennen (20, 30) an das Kommunikationsgerät (21, 31) gesendet wird, und
**dass** das Kommunikationsgerät (21, 31) die Signale mittels mehrerer Antennen empfängt.

4. Verfahren nach einem der Ansprüche 1 bis 3,
**dadurch gekennzeichnet,**
**dass** die Veränderung des an das Kommunikationsgerät (21, 31) gesendeten Signals durch Veränderung einer Strahlform (beampattern) (22, 23, 32) und/oder durch Veränderung eines Precodings und/oder durch Veränderung einer Anzahl von im Multiplexverfahren gesendeter Datenströme des Signals erfolgt.

5. Verfahren nach einem der Ansprüche 1 bis 4,
**dadurch gekennzeichnet,**
**dass** das Feedback-Signal Anweisungen zur Veränderung des an das Kommunikationsgerät (21, 31) gesendeten Signals zur Verbesserung der Übertragungsbedingungen enthält.

6. Verfahren nach einem der Ansprüche 1 bis 5,
**dadurch gekennzeichnet,**
**dass** das Kommunikationssystem ein MIMO-Kommunikationssystem ist.

7. Messsystem zur Überprüfung eines durch ein Kommunikationsgerät (21, 31) gesendeten Feedback-Signals in einem Kommunikationssystem mit einem Antennensystem (20, 30) und einem Messgerät (34),
wobei das Messgerät (34) über eine Luftschnittstelle und das Antennensystem (20, 30) ein Signal an ein Kommunikationsgerät (21, 31) sendet,
wobei das Kommunikationsgerät (21, 31) das Signal empfängt und ein Feedback-Signal in Abhängigkeit von ihm ermittelter Übertragungsbedingungen des Signals erzeugt und an das Messgerät (34) sendet,
wobei das Messgerät (34) eine tatsächliche Empfangsqualität des Signals am Kommunikationsgerät (21, 31) misst, **dadurch gekennzeichnet, dass** das Messsystem die folgenden Schritte durchführt:
- Veränderung der an das Kommunikationsgerät (21, 31) gesendeten Signale dergestalt, dass das gesendete Feedback-Signal keine weitere Verbesserungsmöglichkeit der Übertragungsbedingungen anzeigt;
- Veränderung der Lage des Kommunikationsgeräts (21, 31) und/oder des Antennensystems (20, 30) und/oder Veränderung des gesendeten Signals, und
- Ermittlung einer Qualität des Feedback-Signals durch Gegenüberstellung des Feedback-Signals und der tatsächlichen Empfangsqualität.

8. Messsystem nach Anspruch 7,
**dadurch gekennzeichnet,**
**dass** das Messgerät (34) mit dem Kommunikationsgerät (21, 31) verbunden ist, und
**dass** das Messgerät (34) die tatsächliche Empfangsqualität durch Ermittlung der Bitfehlerrate und/oder der Datenrate ermittelt.

9. Messsystem nach Anspruch 7 oder 8,
**dadurch gekennzeichnet,**
**dass** das Antennensystem (20, 30) ein Mehrfachantennensystem ist, und
**dass** das Kommunikationsgerät (21, 31) die Signale mittels mehrerer Antennen empfängt.

10. Messsystem nach einem der Ansprüche 7 bis 9,
**dadurch gekennzeichnet,**
**dass** das Messgerät (34) die Veränderung des an das Kommunikationsgerät (21, 31) gesendeten Signals durch Veränderung einer Strahlform (beampattern) (22, 23, 32) und/oder durch Veränderung eines Precodings und/oder durch Veränderung einer Anzahl von im Multiplexverfahren gesendeter Datenströme des Signals bewirkt.

11. Messsystem nach einem der Ansprüche 7 bis 10,
**dadurch gekennzeichnet,**
**dass** das Feedback-Signal Anweisungen zur Veränderung des an das Kommunikationsgerät (21, 31) gesendeten Signals zur Verbesserung der Übertragungsbedingungen enthält.

12. Messsystem nach einem der Ansprüche 7 bis 11,
**dadurch gekennzeichnet,**
**dass** das Messgerät (34) über einen Sender (40) und einen Empfänger (41) verfügt, und
**dass** der Sender (40) und der Empfänger (41) mit dem Antennensystem (20, 30) verbunden sind.

13. Messsystem nach einem der Ansprüche 7 bis 12,
**dadurch gekennzeichnet,**
**dass** das Messgerät (34) über eine Anzeige-Einrichtung (44) verfügt und
**dass** die Anzeige-Einrichtung (44) Zwischenergebnisse und/oder Ergebnisse und/oder Parameter der Messung darstellt.

14. Messsystem nach einem der Ansprüche 7 bis 13,
**dadurch gekennzeichnet,**
**dass** das Kommunikationssystem ein MIMO-Kommunikationssystem ist.

## Claims

1. A method for testing a feedback signal transmitted by a communications device (21, 31) within a communications system,
wherein the communications device (21, 31) generates the feedback signal dependent upon transmission conditions of a signal received via the air interface, which it has determined, wherein the actual reception quality of the signal in the communications device (21, 31) is additionally measured,
**characterised in that the following steps are implemented:**
- modification of the signals transmitted to the communications device (21, 31) in such a manner that the transmitted feedback signal displays no further possibility for improving the transmission conditions;
- modification of the position of the communications device (21, 31) and/or of a source of the signal transmitted to the communications device (21, 31) and/or modification of the transmitted signal; and
- determination of a quality of the feedback signal by comparison of the feedback signal and the actual reception quality.

2. The method according to claim 1,
**characterised in that**
the actual reception quality is determined by determining the bit-error rate and/or the data rate.

3. The method according to claim 1 or 2,
**characterised in that**
the signal is transmitted to the communications device (21, 31) by means of several antennae (20, 30), and
that the communications device (21, 31) receives the signals by means of several antennae.

4. The method according to any one of claims 1 to 3,
**characterised in that**
the modification of the signal transmitted to the communications device (21, 31) is implemented by modifying a beam pattern (beam pattern) (22, 23, 32) and/or by modifying a pre-coding and/or by modifying a number of data streams of the signal transmitted using the multiplex method.

5. The method according to any one of claims 1 to 4,
**characterised in that**
the feedback signal contains instructions for the modification of the signal transmitted to the communications device (21, 31) for the improvement of the transmission conditions.

6. The method according to any one of claims 1 to 5,
**characterised in that**
the communications system is a MIMO communications system.

7. A measuring system for testing a feedback signal transmitted by a communications device (21, 31) within a communications system with an antenna system (20, 30) and a measuring device (34), wherein the measuring device (34) transmits a signal via an air interface and the antenna system (20, 30) to a communications device (21, 31), wherein the communications device (21, 31) receives the signal and generates a feedback signal dependent upon transmission conditions of the signal, which it has determined, and transmits it to the measuring device (34),
wherein the measuring device (34) measures an actual reception quality of the signal in the communications device (21, 31),
**characterised in that the measuring system implements the following steps:**
- modification of the signals transmitted to the communications device (21, 31) in such a manner that the transmitted feedback signal displays no further possibility of improvement of the transmission conditions;
- modification of the position of the communications device (21, 31) and/or of the antenna system (20, 30) and/or modification of the transmitted signal, and
- determination of a quality of the feedback signal by comparison of the feedback signal and the actual reception quality.

8. The measuring system according to claim 7,
**characterised in that**
the measuring device (34) is connected to the communications device (21, 31), and
that the measuring device (34) determines the actual reception quality by determining the bit-error rate and/or the data rate.

9. The measuring system according to claim 7 or 8,
**characterised in that**
the antenna system (20, 30) is a multiple antenna system, and
that the communications device (21, 31) receives the signals by means of several antennae.

10. Measuring system according to any one of claims 7 to 9,
**characterised in that**
the measuring device (34) brings about the modification of the signal transmitted to the communications device (21, 31) by modifying a beam pattern (beam pattern) (22, 23, 32) and/or by modifying a pre-coding and/or by modifying a number of data streams of the signal transmitted using the multiplex method.

11. The measuring system according to any one of claims 7 to 10,
**characterised in that**
the feedback signal contains instructions for the modification of the signal transmitted to the communications device (21, 31) for the improvement of the transmission conditions.

12. The measuring system according to any one of claims 7 to 11,
**characterised in that**
the measuring device (34) comprises a transmitter (40) and a receiver (41), and
that the transmitter (40) and the receiver (41) are connected to the antenna system (20, 30).

13. The measuring system according to any one of claims 7 to 12,
**characterised in that**
the measuring device (34) comprises a display device (44) and
that the display device (44) presents intermediate results and/or results and/or parameters of the measurement.

14. The measuring system according to any one of claims 7 to 13,
**characterised in that**
the communications system is a MIMO communications system.

## Revendications

1. Procédé de vérification d'un signal de rétroaction envoyé grâce à un appareil de communication (21, 31) dans un système de communication,
dans lequel l'appareil de communication (21, 31) génère le signal de rétroaction selon des conditions de transmission qu'il détecte d'un signal reçu par l'intermédiaire d'une interface aérienne,
dans lequel la qualité de réception effective du signal est en plus mesurée dans l'appareil de communication (21, 31), **caractérisé en ce que** les étapes suivantes sont effectuées :
- modification des signaux envoyés à l'appareil de communication (21, 31) de sorte que le signal de rétroaction envoyé ne présente aucune autre possibilité d'amélioration des conditions de transmission ;
- modification de la position de l'appareil de communication (21, 31) et/ou d'une source du signal envoyé à l'appareil de communication (21, 31) et/ou modification du signal envoyé, et
- détection de la qualité d'un signal de rétroaction par comparaison du signal de rétroaction et de la qualité de réception effective.

2. Procédé selon la revendication 1, **caractérisé en ce que**
la qualité de réception effective est détectée par détection du taux d'erreur de bit et/ou du taux de données.

3. Procédé selon la revendication 1 ou 2, **caractérisé en ce que**
le signal est envoyé au moyen de plusieurs antennes (20, 30) à l'appareil de communication (21, 31), et
**en ce que** l'appareil de communication (21, 31) reçoit des signaux au moyen de plusieurs antennes.

4. Procédé selon l'une des revendications 1 à 3, **caractérisé en ce que**
la modification du signal envoyé à l'appareil de communication (21, 31) se produit grâce à la modification d'une forme du faisceau (beampattern) (22, 23, 32) et/ou par modification d'un précodage et/ou par modification d'une pluralité de flux de données du signal envoyés selon un procédé multiplex.

5. Procédé selon l'une des revendications 1 à 4, **caractérisé en ce que** le signal de rétroaction comporte des instructions pour la modification du signal envoyé à l'appareil de communication (21, 31) en vue de l'amélioration des conditions de transmission.

6. Procédé selon l'une des revendications 1 à 5, **caractérisé en ce que**
le système de communication est un système de communication MIMO.

7. Système de mesure en vue de la vérification d'un signal de rétroaction envoyé par un appareil de communication (21, 31) dans un système de communication comportant un système d'antenne (20, 30) et un appareil de mesure (34),
dans lequel l'appareil de mesure (34) envoie par l'intermédiaire d'une interface aérienne et du système d'antenne (20, 30) un signal à l'appareil de communication (21, 31),
dans lequel l'appareil de communication (21, 31) reçoit le signal et génère un signal de rétroaction conformément aux conditions de transmission qu'il détecte du signal et l'envoie à l'appareil de mesure (34),
dans lequel l'appareil de mesure (34) mesure une qualité de réception effective du signal dans l'appareil de communication (21, 31),
**caractérisé en ce que** le système de mesure effectue les étapes suivantes :
- modification des signaux envoyés à l'appareil de communication (21, 31) de sorte que le signal de rétroaction ne présente aucune autre possibilité d'amélioration des conditions de transmission ;
- modification de la position de l'appareil de communication (21, 31) et/ou du système d'antenne (20, 30) et/ou modification du signal envoyé, et
- détection d'une qualité du signal de rétroaction par comparaison du signal de rétroaction et de la qualité de réception effective.

8. Système de mesure selon la revendication 7, **caractérisé en ce que**
l'appareil de mesure (34) est relié à l'appareil de communication (21, 31), et
**en ce que** l'appareil de mesure (34) détecte la qualité de réception effective par détection du taux d'erreur de bits et/ou du taux de données.

9. Système de mesure selon la revendication 7 ou 8, **caractérisé en ce que**
le système d'antenne (20, 30) est un système d'antennes multiples, et
**en ce que** l'appareil de communication (21, 31) reçoit les signaux au moyen de plusieurs antennes.

10. Système de mesure selon l'une des revendications 7 à 9, **caractérisé en ce que**
l'appareil de mesure (34) effectue la modification du signal envoyé à l'appareil de communication (21, 31) par modification d'une forme du faisceau (beampattern) (22, 23, 32) et/ou par modification d'un précodage et/ou par modification d'une pluralité de flux de données du signal envoyés selon un procédé multiplex.

11. Système de mesure selon l'une des revendications 7 à 10, **caractérisé en ce que**
le signal de rétroaction comporte des instructions en vue de la modification du signal envoyé à l'appareil de communication (21, 31) pour l'amélioration des conditions de transmission.

12. Système de mesure selon l'une des revendications 7 à 11, **caractérisé en ce que**
l'appareil de mesure (34) dispose d'un émetteur (40) et d'un récepteur (41), et
**en ce que** l'émetteur (40) et le récepteur (41) sont reliés au système d'antenne (20, 30).

13. Système de mesure selon l'une des revendications 7 à 12, **caractérisé en ce que**
l'appareil de mesure (34) dispose d'un dispositif d'affichage (44) et
**en ce que** le dispositif d'affichage (44) affiche des résultats intermédiaires et/ou des résultats et/ou des paramètres de mesure.

14. Système de mesure selon l'une des revendications 7 à 13, **caractérisé en ce que**
le système de communication est un système de communication MIMO.
